# EUROPEAN PATENT SPECIFICATION

(11) **EP 3 527 849 B1**
(45) Date of publication and mention of the grant of the patent: **27.10.2021**
(21) Application number: 16907678.3
(22) Date of filing: 10.11.2016
(51) Int. Cl.: F16H 19/04, F16H 55/26

(54) **RACK AND PINION DRIVE COMPONENT AND DRIVE EQUIPMENT**
ZAHNSTANGEGETRIEBEANORDNUNG UND GETRIEBEVORRICHTUNG
COMPOSANT D'ENTRAÎNEMENT À CRÉMAILLÈRE, ET ÉQUIPEMENT D'ENTRAÎNEMENT

(30) Priority: 13.10.2016 CN 201610895136
(43) Date of publication of application: 21.08.2019
(73) Proprietor: Shenzhen Zhaowei Machinery&electronics Co., Ltd., Shenzhen, Guangdong 518103 (CN)
(72) Inventor: FEI, Jiayi, Shenzhen Guangdong 518000 (CN); XIN, Dong, Shenzhen Guangdong 518000 (CN); LI, Ping, Shenzhen Guangdong 518000 (CN)
(74) Representative: dompatent von Kreisler Selting Werner - Partnerschaft von Patent- und Rechtsanwälten mbB
(86) International application number: PCT/CN2016/105264
(87) International publication number: WO 2018/068355

(56) References cited:
- EP-A1- 1 959 162
- WO-A1-98/36192
- CN-A- 104 791 441
- CN-A- 105 987 156
- CN-U- 204 253 794
- CN-U- 206 145 079
- CN-Y- 2 254 131
- DE-A1- 3 612 048
- JP-A- 2000 055 170

## Description

### THCHNICAL FIELD

The present invention relates to the technical field of mechanical transmission, and more particularly relates to a rack and pinion transmission assembly and transmission device.

### BACKGROUND

The rack and pinion transmission is an important transmission mode in the field of mechanical transmission, and has a wide range of applications in the fields of instrumentation, machinery equipment, communications, medical treatment, and so on.

With the development of the technology, in order to make the device be compact so as to meet the miniaturization design requirements, a cooperation between a pinion gear and a plurality of racks is often adopted to mesh transmission. In the existing design, when a pinion gear is moving from one rack to another, since the rotation angle of the pinion gear is arbitrary, the situation that the pinion gear and rack generate interference or even get stuck in the moving engagement process may often occur, this not only damages the accuracies of the end surfaces of the pinion gear and rack, but also affects the smoothness of the transmission;

Chinese patent CN 104791441A discloses a power mechanism which comprises a box body. An output shaft and a transition shaft which are arranged in parallel are arranged on the box body in a rotating mode. A first single-way transmission device and a second single-way transmission device are fixedly arranged on the output shaft. The driving directions of the first single-way transmission device and the second single-way transmission device are the same. A first gear is arranged on the first single-way transmission device in a sleeved mode. A second gear is arranged on the second single-way transmission device in a sleeved mode. A third gear meshed with the second gear is fixedly arranged on the transition shaft. A fourth gear which is placed on the same straight line with the first gear in the radial direction is fixedly arranged on the transition shaft. A rack part for driving the first gear and the fourth gear to rotate is arranged on the box body. The output torque of the power mechanism is greatly improved.

### SUMMARY OF THE INVENTION

One object of the present invention is to provide a rack and pinion transmission assembly and transmission device, which aim at solving the problem in the prior art of how to avoid interference and even jamming of a rack and pinion in a moving meshing process.

The present invention is realized as follows: a rack and pinion transmission assembly, comprises a pinion gear and a rack meshing with the pinion gear; wherein, assembly, comprises a pinion gear and a rack meshing with the pinion gear; wherein, the pinion gear comprises a plurality of pinion teeth, every two adjacent pinion teeth form a pinion tooth groove; the rack comprises a base with a planar top and a plurality of rack teeth at intervals on the base, every two adjacent rack teeth and the base form a rack tooth groove, the rack comprises sloped rack teeth and flat rack teeth disposed alternately in the transmission direction of the rack; both a front end surface and a rear end surface of the sloped rack teeth are planes, a plane perpendicular to the transmission direction of the rack is a first plane, both an angle between the first plane and the front end surface and an angle between the first plane and the rear end surface are acute angles, a plane parallel to the transmission direction of the rack and perpendicular to the first plane is a second plane, and both an angle between the second plane and the front end surface and an angle between the second plane and the rear end surface are acute angles; the length of the sloped rack teeth is greater than the length of the flat rack teeth in a linear direction parallel to both the first plane and the second plane; tooth flanks on two sides of the pinion teeth are respectively connected with the end surfaces of the adjacent pinion teeth by chamfer surfaces, and the two adjacent chamfer surfaces intersect at an intersection line.

Preferably, the front end surface and the rear end surface of the sloped rack teeth are symmetrically disposed on both sides of the center line of the base of the rack, respectively.

Preferably, the front end surface and the rear end face of the flat rack teeth are perpendicular to the top of the base and parallel to the transmission direction of the rack.

Preferably, a rack tooth profile of the rack teeth is an oblique line, and a pinion tooth profile of the pinion teeth is an involute.

Preferably, an extension line of the intersection line passes through the opinion gear center, and the two adjacent chamfer surfaces are symmetrically disposed on both sides of the intersection lines.

Preferably, the rack and pinion transmission assembly comprises one said pinion gear and the plurality of racks meshing with the pinion gear.

Preferably, the rack and pinion transmission assembly comprises one said rack and the plurality of pinion gears meshing with the rack.

Preferably, the rack and pinion transmission assembly comprises the plurality of racks and the plurality of pinion gears meshing with the racks.

Preferably, the tooth shape of the rack and of the opinion gear are straight teeth.

The present invention also provided a transmission device, the transmission device comprises the aforementioned rack and pinion transmission assembly.

The technical effects of the present invention over the prior art are as follows: the rack and pinion transmission assembly achieves power transmission by providing sloped rack teeth and flat rack teeth on the rack and utilizing the meshing of the pinion gear and the rack; specifically, the front end surface and the rear end surface of the sloped rack teeth are disposed at an acute angle with respect to the first plane, and the front end surface and the rear end surface of the sloped rack teeth are disposed at an acute angle with respect to the second plane; tooth flanks on two sides of the pinion teeth are respectively connected with the front end surface and rear end surface by chamfer surfaces, and the two adjacent chamfer surfaces intersect at an intersection line, so that the tooth flanks can slide smoothly on the front end surface or the rear end surface of sloped rack teeth when the pinion teeth mesh with the sloped rack teeth and the flat rack teeth; the length of the sloped rack teeth is greater than the length of the flat rack teeth in a linear direction parallel to both the first plane and the second plane, therefore, the pinion teeth will firstly contact with the sloped rack teeth and then smoothly slide into the rack tooth grooves during the meshing of the pinion gear and the rack, without the occurrence of interference and even jamming of the pinion gear and the rack in the process of meshing.

### BRIEF DESCRIPTION OF THE DRAWINGS

In order to make the technical solutions in the embodiments of the present invention clearer, the accompanying drawings to be used in the embodiments and the description of the prior art will be briefly introduced below, it is apparent that the drawings in the following description are merely some embodiments of the present invention and that other drawings may be obtained by those skilled in the field without departing from the inventive nature of the invention, its scope defined in the appended claims.
Fig. 1 is a perspective schematic view of a rack according to an embodiment of the present invention.
Fig.2 is an enlarged view of a partial area M in Fig. 1;
Fig.3 is a plan view of the rack in Fig. 1;
Fig.4 is an enlarged view of a partial area N in Fig. 3;
Fig.5 is a perspective schematic view of a pinion gear according to an embodiment of the present invention.
Fig.6 is a front view of the pinion gear in Fig. 5;
Fig.7 is a perspective schematic view of the moving engagement of the pinion gear with the different racks according to an embodiment of the present invention.
Fig. 8 is a schematic plan view of the rack and pinion meshing in a case of Fig.7;
Fig.9 is a schematic plan view of the rack and pinion meshing in the other case of Fig.7;
Fig. 10 is a schematic plan view of the rack and pinion meshing in another case of Fig.7.

The drawings are marked as follows:

| | | | |
|---|---|---|---|
| 10 | rack | 12 | rack tooth groove |
| 10a | first rack | 13 | base |
| 10b | second rack | 20 | pinion gear |
| 11 | rack teeth | 21 | pinion teeth |
| 111 | sloped rack teeth | 212 | tooth flanks |
| 1111 | front end surface | 213 | chamfer surface |

| | | | |
|---|---|---|---|
| 1112 | rear end surface | 214 | intersection line |
| 112 | flat rack teeth | 22 | pinion tooth groove |

### DETAILED DESCRIPTION OF THE EMBODIMENTS

In order to make the purposes, technical solutions, and advantages of the present invention clearer and more understandable, the present invention will be further described in detail hereinafter with reference to the accompanying drawings and embodiments. It should be understood that the embodiments described herein are only intended to illustrate but not to limit the present invention.

It is noted that when a component is referred to as being "fixed on" or disposed on" another component, it can be directly or indirectly on the other component. When a component is referred to as being "connected to" another component, it can be directly or indirectly connected to the other component.

It should also be noted that the same or similar reference numbers in the drawings of the embodiments of the present invention refer to the same or similar components; in the description of the present invention, it should be understood that, if the terms "upper", "lower", "left", "right", and other terms indicating the orientation or positional relationship are based on orientation or positional relationship shown in the drawings, only for the purpose of facilitating the description of the invention and simplifying the description, instead of indicating or implying that the indicated device or component must have a specific orientation and constructed and operated in a particular orientation, and therefore the terms describing the positional relationship in the drawings are only for illustration and are not to be construed as limiting the present invention the specific meaning of the above terms in the present invention could be understood by those of ordinary skill in the art according to different specific conditions.

In addition, the terms "first" and "second" are for illustrative purposes only and should not be construed as indicating or implying a relative importance or implicitly indicating the quantity of technical features indicated. Therefore, a feature that defines "first" and "second" may expressly or implicitly include one or more of the features. In the description of the present invention, "multiple" means two or more than two, unless otherwise specifically defined.

In order to illustrate the technical solution of the invention the implementation of an intelligent closestool provided by the present invention is described in detail below with reference to the specific drawings.

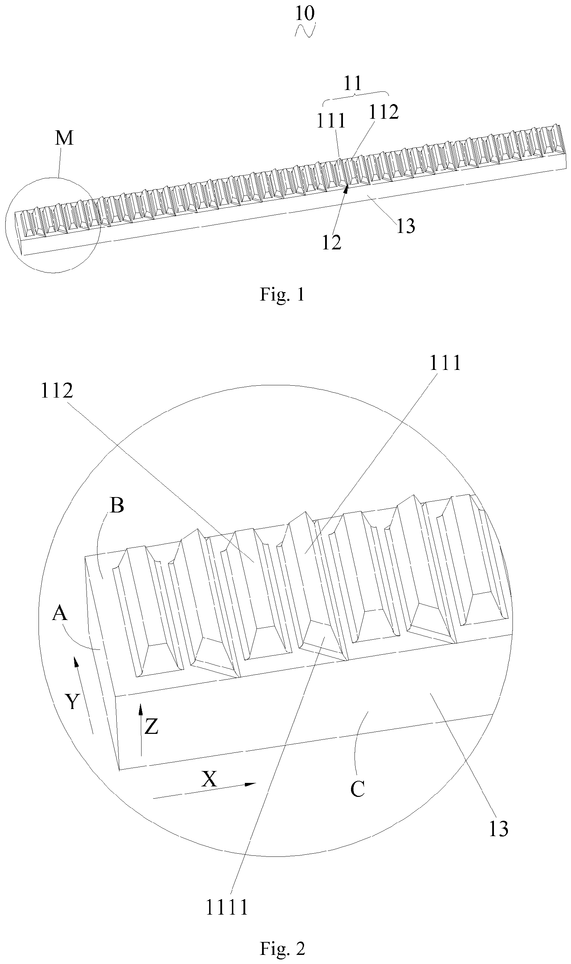

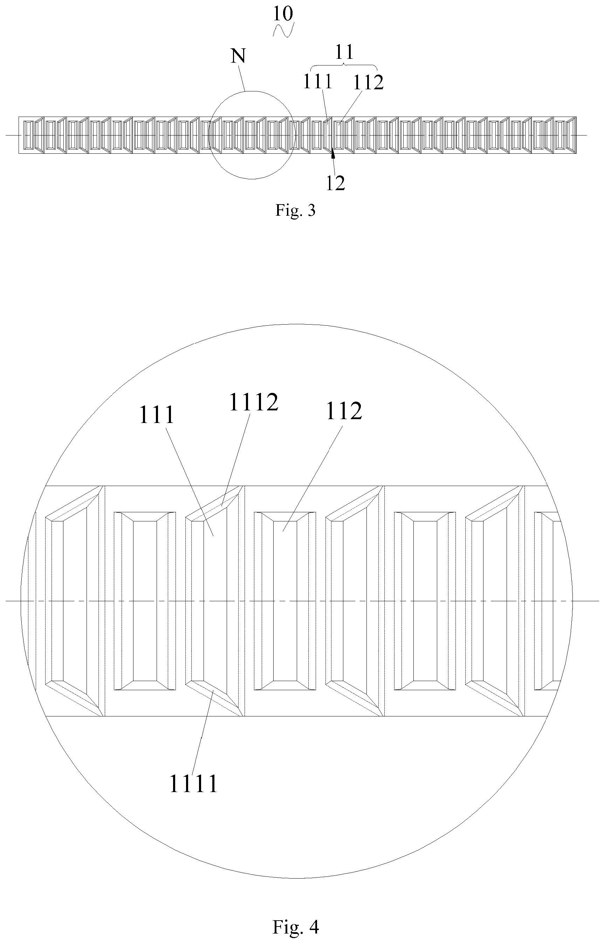

Please refer to Fig.1 to Fig.5 and Fig.8 to Fig.10, a rack and pinion transmission assembly according to embodiments of the present invention comprises a pinion gear 20 and a rack 10 meshing with the pinion gear 20; the pinion gear 20 comprises a plurality of pinion teeth 21, every two adjacent pinion teeth 21 form a pinion tooth groove 22; the rack 10 comprises a base 13 with a planar top and a plurality of rack teeth 11 disposed at intervals on the base 13, every two adjacent rack teeth 11 and the base 13 form a rack tooth groove 12; the rack 11 comprises sloped rack teeth 111 and flat rack teeth 112 disposed alternately in the transmission direction of the rack 10; both a front end surface 1111 and a rear end surface 1112 of the sloped rack teeth 111 are planes, a plane perpendicular to the transmission direction of the rack 10 is a first plane A, and both an angle between the first plane A and the front end surface 1111 and an angle between the first plane A and the rear end surface 1112 are acute angles; a plane parallel to the transmission direction of the rack 10 and perpendicular to the first plane A is a second plane B, both an angle between the second plane B and the front end surface 1111 and an angle between the second plane B and the rear end surface 1112 are acute angles; the length of the sloped rack teeth 111 is greater than the length of the flat rack teeth 112 in a linear direction parallel to both the first plane A and the second plane B; tooth flanks 212 on two sides of the pinion teeth 21 are respectively connected with the end surfaces of the adjacent pinion teeth 21 by chamfer surfaces 213, and the two adjacent chamfer surfaces 213 intersect at an intersection line 214.

It should be noted that, as shown in Fig. 2, a first direction X is defined as the transmission direction of the rack 10, that is, the direction in which the sloped rack teeth 111 and the flat rack teeth 112 are alternately disposed; a plane perpendicular to the first direction X is defined as a first plane A;
a second direction Y is defined as a direction perpendicular to the transmission direction of the rack 10 and parallel to the top of the base 13, that is, the second direction Y is perpendicular to the first direction X; a plane parallel to the second direction Y and perpendicular to the first plane A is defined as a second plane B;
a third direction Z is defined as a direction perpendicular to the top of the base 13, that is, the third direction Z, the first direction X, and the second direction Y are perpendicular to each other; a third plane C is parallel to the third direction Z, and the third plane C, the first plane A, and the second plane B are perpendicular to each other.

In this embodiment, the top surface of the sloped rack teeth 111 and the top surface of flat rack teeth 112 are parallel to each other and to the second plane B.

The rack and pinion transmission assembly according to the embodiments of the present invention by providing sloped rack teeth and flat rack teeth on the rack 10 and utilizing the meshing of the pinion gear 20 and the rack 10, achieves power transmission; specifically, the front end surface 1111 and the rear end surface 1112 of the sloped rack teeth 111 are disposed respectively at an acute angle with respect to the first plane A, and the front end surface 1111 and the rear end surface 1112 of the sloped rack teeth 111 are disposed respectively at an acute angle with respect to the second plane B; tooth flanks 212 on two sides of the pinion teeth 21 are respectively connected with the front end surface and rear end surface by chamfer surfaces 213, and the two adjacent chamfer surfaces 213 intersect at an intersection line 214; so that the tooth flanks 213 can slide smoothly on the front end surface 1111 or the rear end surface 1112 of sloped rack teeth when the pinion teeth 21 mesh with the sloped rack teeth 111 and the flat rack teeth 112. At same time, the length of the sloped rack teeth 111 is greater than the length of the flat rack teeth 112 in the direction Y, therefore, the pinion teeth 21 will firstly contact with the sloped rack teeth 111 and then smoothly slide into the rack tooth grooves 12 during the meshing of the pinion gear 20 and the rack 10, without the occurrence of interference and even jamming of the pinion gear 20 and the rack 10 in the process of meshing.

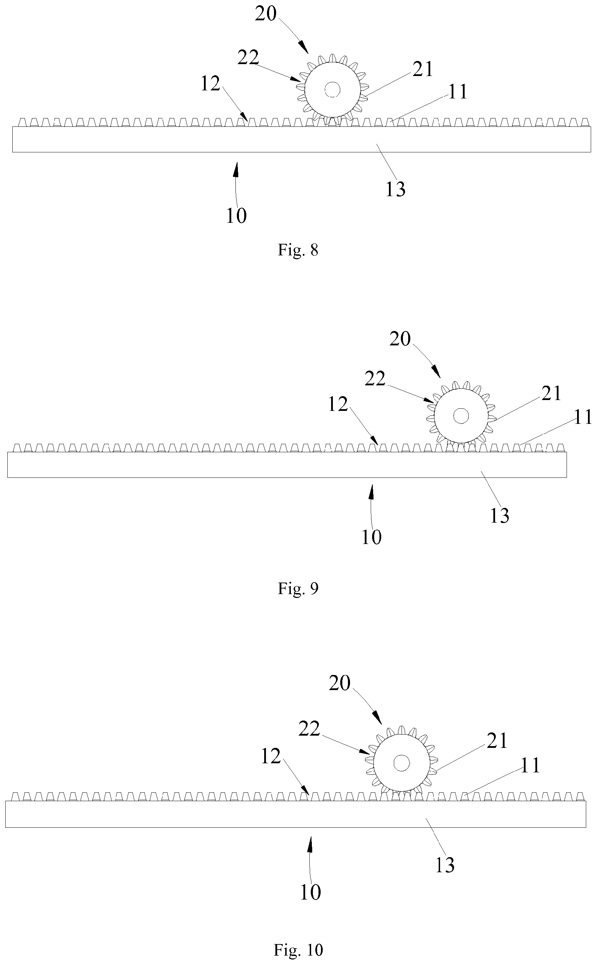

When the pinion gear 20 is moved into the meshing transmission with the rack 10 in the forward or reverse direction along the second direction Y, the following three cases exist:
In the first case, as shown in the Fig.8, when the pinion teeth 21 of the pinion gear 20 are exactly opposite to the rack teeth 11 of the rack 10, the pinion gear 20 can smoothly enter into and normally mesh with the rack 10, regardless of whether the pinion gear 20 and the rack 10 adopt the structure in this embodiment or the common standard structure.
In the second case, as shown in the Fig.2, Fig.4, and Fig.9, when the pinion teeth 21 of the pinion gear 20 are opposite to the rack teeth 11 of the rack 10, the front end surface 1111 and the rear end surface 1112 of the sloped rack teeth 111 form an acute angle with respect to the first plane A respectively, and the front end surface 1111 and the rear end surface 1112 respectively form an acute angle with respect to the second plane B, that is, the front end surface 1111 and the rear end surface 1112 of the sloped rack teeth 111 define a slope in both the first direction X and the third direction Z; at the same time, tooth flanks 212 on two sides of the pinion teeth 21 are respectively connected with the end surfaces of the adjacent pinion teeth 21 by the chamfer surfaces 213, and the two adjacent chamfer surfaces 213 intersect at the intersection line 214, that is, the pinion teeth 21 does not have any plane at its ends. Therefore, in the case of such meshing, the end surface of the sloped rack teeth 111 is directly contacted with the intersection line 21 on the end surface of the pinion gear 20, and during the continuous movement of the pinion gear 20, the pinion gear 20 can enter the normal engagement position in the rack 10 with a slight rotation, so that the engagement can be successfully completed.
In the third case, as shown in the Fig.2, Fig.4, and Fig.10, when the rack tooth grooves 12 of the rack 10 are opposite to the pinion tooth grooves 22 of the pinion gear 20, since the distance between an arbitrary point on the front end surface 1111 of the sloped rack teeth 111 and an arbitrary point on the rear end surface 1112 of the sloped rack teeth 111 is greater than the maximum distance between the two end surfaces of any one of flat rack teeth 112, that is, the length of the sloped rack teeth 111 is greater that the length of the flat rack teeth 112 in the Y direction, the two pinion teeth 21 of the pinion gear 20 can't come into contact with the sloped rack teeth 111 and flat rack teeth 112 of the rack 10 synchronously, but contact one after the other. Specifically, the pinion teeth 21 of the pinion gear 20 will firstly contact the end surface of the longer sloped rack teeth 111 on the rack 10 at the moment. In this case, the third case is converted into the second case, that is, the pinion teeth 21 contacted firstly will slightly rotate in such a manner that the pinion teeth 21 contact with the rack teeth 11 in the second case, the pinion gear 20 smoothly enters the position where the rack 10 normally meshes with the pinion gear 20 during the continuous movement of the pinion gear 20.

In the above three cases, the pinion gear 20 and the rack 10 can realize a smooth engagement, the problem of interference and even jamming during the engagement of the pinion gear 20 and the rack 10 can be avoided, which reduces the impact caused by mutual collision between the transmission components during the meshing, reduces the wear on the device, and improves the stability of the transmission.

The pinion gear 20, assumed as a driving member in the above three cases, moves in the forward or reverse direction of the second direction Y into the rack 10. It can be easily understood that the rack 10 can also be used as a driving member moves in the forward or reverse direction of the second direction Y into the pinion gear 20, the principle of action at this time is exactly similar to the above three cases, and is not detailed here.

Please refer to Fig.2 to Fig.4, it is preferable that the front end surface 1111 and the rear end surface 1112 of the sloped rack teeth 111 are symmetrically disposed on both sides of the center line of the base 13 of the rack 10, respectively. The symmetrical arrangement of the front and rear end surfaces facilitate the smooth engagement of the pinion gear 20 and the sloped rack teeth 111, regardless of whether the pinion gear 20 moves in the forward or reverse direction of the second direction Y into the sloped rack teeth 111. At the same time, the symmetrical arrangement of the structure can also facilitate the design and manufacture, and enhance the versatility of the rack 10.

Please refer to Fig.2 to Fig.4, it is preferable that both the front end surface and the rear end face of the flat rack teeth 112 are perpendicular to the top of the base 13 and parallel to the transmission direction of the rack 10, that is, the front and rear end surfaces of the flat rack teeth 112 are parallel to the third plane C. The front and rear end surfaces of the flat rack teeth 112 are vertical planes, which will not have any influence on the meshing process of the pinion gear 20 and the rack 10, but it is helpful to reduce the machining difficulty of the rack 10, reduce the workload in the manufacturing process of the rack 10, and improve the production efficiency.

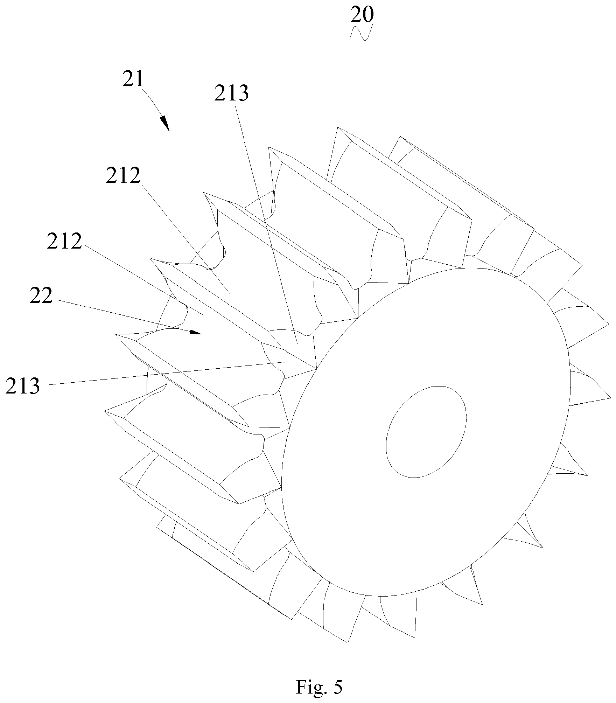

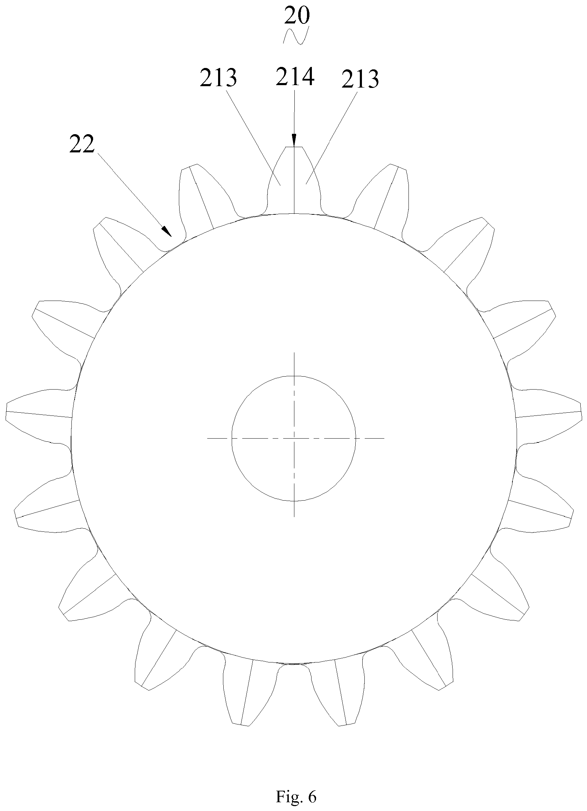

Please refer to Fig.5 and Fig.6, it is preferable that a rack tooth profile of the rack teeth 11 is an oblique line, and a pinion tooth profile of the pinion teeth 21 is an involute. With the transmission structure of the pinion gear 20 with the involute pinion tooth profile and the rack 10 with the oblique line tooth profile, the pinion gear 20 and the rack 10 have the characteristic that the meshing angle is always constant during the meshing, which can enable a relatively constant instantaneous transmission ratio and is beneficial to make the pinion gear 20 and the rack 10 have better smoothness during the normal engagement and transmission.

Please refer to Fig.5 and Fig.6, it is preferable that an extension line 214 of the intersection line 214 passes through the opinion gear center, and the two adjacent chamfer surfaces 213 are symmetrically disposed on both sides of the intersection line 214. The symmetrical arrangement of the two chamfer surfaces 213, on the one hand, it can facilitate the chamfering of the end surfaces of the pinion gear 20 and enhance the versatility of the pinion gear 20; on the other hand, when the pinion gear 20 enters the engagement with the rack 10 from different positions, these impacts on the rack 10 are similar and these engagement times are also substantially the same, so that the two chamfer surfaces 213 are also subjected to substantially the same wear during use, so as to avoid reducing the service life of the pinion gear 20 due to excessive unilateral wear.

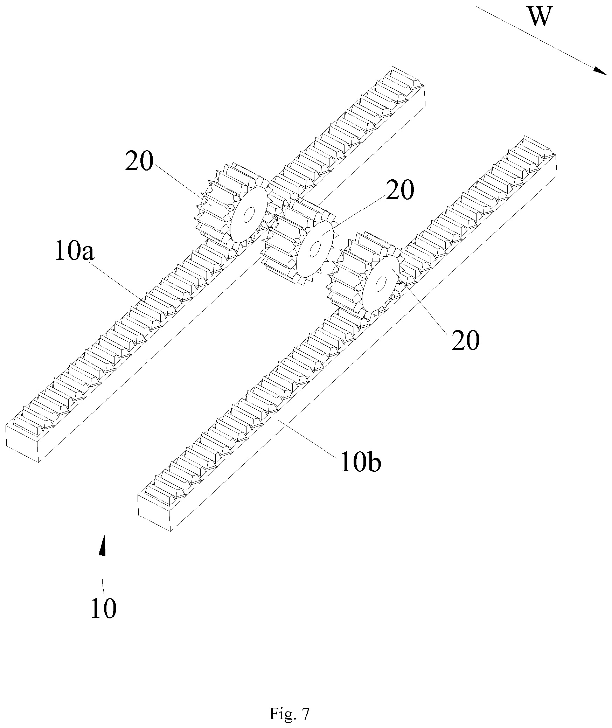

Further, the rack and pinion transmission assembly comprises one pinion gear 20 and a plurality of racks 10 meshing with the pinion gear. For convenience, please refer to Fig.1 and Fig.7, and one pinion gear 20 and two racks 10 are taken as an example for description. Assuming the initial state is that the pinion gear 20 is meshing with a first rack 10a, the pinion gear 20 may move into engagement with a second rack 10b in the direction W shown in Fig.7. By the transmission structure with one pinion gear 20 and a plurality of racks 10 meshing with the pinion gear 20, the transmission structure is relatively compact in overall and forms a switchable transmission mode of rack and pinion, such that the miniaturization and multi-functionalization of the transmission device can be realized.

Please refer to Fig.1 and Fig.7, it should be understood that the rack and pinion transmission assembly comprises one rack 10 and a plurality of pinion gears 20 meshing with the rack. The main difference between the structure of one pinion gear 20 and a plurality of racks 10 and the structure of one rack 10 and a plurality of pinion gears 20 described above is that the rack 10 is the driving element and the location of the pinion gears 20 is relatively fixed during the engagement of the rack 10.

Please refer to Fig.1 and Fig.7, it should also be understood that the rack and pinion transmission assembly may further comprise a plurality of racks 10 and a plurality of pinion gears 20 meshing with the racks. In this case, both the pinion gear 20 and the rack 10 can be used as a driving element or a fixed follower, so that various rack and pinion connection modes can be realized.

Further, as shown in Fig.2 and Fig.5, the tooth shape of the rack 10 and of the opinion gear 20 are straight teeth. With a relatively simple structure design, mature manufacturing process, high transmitting efficiency and relatively small transmission noise, the straight teeth are the most important tooth shape in the rack and pinion transmission structure currently.

An embodiment of the present invention further provides a transmission device, which comprises the above-mentioned rack and pinion transmission assembly. The rack and pinion assembly adopts the above structure, which is not described in detail herein. Such transmission device, with a relatively compact structural design and a variety of transmission mode, can meet the needs of various types of industrial production.

The aforementioned embodiments are only preferred embodiments of the present invention, and are not intended for limiting the present disclosure.

## Claims

1. A rack and pinion transmission assembly, comprising a pinion gear (20) and a rack (10) meshing with the pinion gear (20); wherein, the pinion gear (20) comprises a plurality of pinion teeth (21), every two adjacent pinion teeth (21) form a pinion tooth groove (22); the rack (10) comprises a base (13) with a planar top and a plurality of rack teeth (11) disposed at intervals on the base (13), every two adjacent rack teeth (11) and the base (13) form a rack tooth groove (12); **characterized in that** the rack (10) comprises sloped rack teeth (111) and flat rack teeth (112) disposed alternately in the transmission direction of the rack (10); both a front end surface (1111) and a rear end surface (1112) of the sloped rack teeth (111) are planes, a plane perpendicular to the transmission direction of the rack (10) is a first plane, and both an angle between the first plane and the front end surface (1111) and an angle between the first plane and the rear end surface (1112) are acute angles; a plane parallel to the transmission direction of the rack (10) and perpendicular to the first plane is a second plane, both an angle between the second plane and the front end surface (1111) and an angle between the second plane and the rear end surface (1112) are acute angles; the length of the sloped rack teeth (111) is greater than the length of the flat rack teeth (112) in a linear direction parallel to both the first plane and the second plane; tooth flanks (212) on two sides of the pinion teeth (21) are respectively connected with the end surfaces of the adjacent pinion teeth (21) by chamfer surfaces (213), and the two adjacent chamfer surfaces (213) intersect at an intersection line (214).

2. The rack (10) and pinion transmission assembly according to claim 1, wherein the front end surface (1111) and the rear end surface (1112) of the sloped rack teeth (111) are symmetrically disposed on both sides of the center line of the base (13) of the rack (10), respectively.

3. The rack (10) and pinion transmission assembly according to claim 1, wherein the front end surface (1111) and the rear end face of the flat rack teeth (112) are perpendicular to the top of the base (13) and parallel to the transmission direction of the rack (10).

4. The rack (10) and pinion transmission assembly according to claim 1, wherein a rack (10) tooth profile of the rack teeth (11) is an oblique line, and a pinion tooth profile of the pinion teeth (21) is an involute.

5. The rack (10) and pinion transmission assembly according to claim 1, wherein an extension line of the intersection line (214) passes through the opinion gear (20) center, and the two adjacent chamfer surfaces are symmetrically disposed on both sides of the intersection line (214).

6. The rack (10) and pinion transmission assembly according to claim 1, wherein the rack (10) and pinion transmission assembly comprises one said pinion gear (20) and the plurality of racks (10) meshing with the pinion gear (20).

7. The rack (10) and pinion transmission assembly according to claim 1, wherein the rack (10) and pinion transmission assembly comprises one said rack and the plurality of pinion gears (20) meshing with the rack (10).

8. The rack (10) and pinion transmission assembly according to claim 1, wherein the rack (10) and pinion transmission assembly comprises a plurality of racks and the plurality of pinion gears (20) meshing with the racks (10).

9. The rack (10) and pinion transmission assembly according to any one of claims 1 to 8, wherein the tooth shape of the rack (10) and of the opinion gear (20) are straight teeth.

10. A transmission device, wherein the transmission device comprises the rack (10) and pinion transmission assembly according to any one of claims 1 to 9.

## Patentansprüche

1. Zahnstangengetriebeanordnung, die ein Ritzel (20) und eine mit dem Ritzel (20) im Eingriff stehenden Zahnstange (10) aufweist; wobei das Ritzel (20) eine Vielzahl von Ritzelzähnen (21) aufweist, wobei jeweils zwei benachbarte Ritzelzähne (21) eine Ritzelzahnnut (22) bilden; wobei die Zahnstange (10) eine Basis (13) mit einer planaren Oberseite und einer Vielzahl von Zahnstangenzähnen (11) aufweist, die in Abständen auf der Basis (13) angeordnet sind, wobei jeweils zwei benachbarte Zahnstangenzähne (11) und die Basis (13) eine Zahnstangenzahnnut (12) bilden; **dadurch gekennzeichnet, dass** die Zahnstange (10) geneigte Zahnstangenzähne (111) und flache Zahnstangenzähne (112) aufweist, die abwechselnd in der Übertragungsrichtung der Zahnstange (10) angeordnet sind; sowohl eine vordere Endfläche (1111) als auch eine hintere Endfläche (1112) der geneigten Zahnstangenzähne (111) Ebenen sind, wobei eine Ebene senkrecht zu der Übertragungsrichtung der Zahnstange (10) eine erste Ebene ist, und sowohl ein Winkel zwischen der ersten Ebene und der vorderen Endfläche (1111) als auch ein Winkel zwischen der ersten Ebene und der hinteren Endfläche (112) spitze Winkel sind; eine Ebene parallel zu der Übertragungsrichtung der Zahnstange (10) und senkrecht zu der ersten Ebene eine zweite Ebene ist, sowohl ein Winkel zwischen der zweiten Ebene und der vorderen Endfläche (1111) als auch ein Winkel zwischen der zweiten Ebene und der hinteren Endfläche (1112) spitze Winkel sind; die Länge der geneigten Zahnstangenzähne (111) größer ist als die Länge der flachen Zahnstangenzähne (212) in einer linearen Richtung parallel zu sowohl ersten Ebene als auch der zweiten Ebenen; Zahnflanken (212) auf zwei Seiten der Zahnstangenzähne (21) jeweils mit den Endflächen der benachbarten Ritzelzähne (21) durch abgeschrägte Flächen (213) verbunden, und die zwei benachbarten abgeschrägten Flächen (213) sich an einer Schnittlinie (214) schneiden.

2. Zahnstangengetriebeanordnung nach Anspruch 1, wobei die vordere Endfläche (1111) und die hintere Endfläche (1112) der geneigten Zahnstangenzähne (111) jeweils symmetrisch auf beiden Seiten der Mittelinie der Basis (13) der Zahnstange (10) angeordnet sind.

3. Zahnstangengetriebeanordnung nach Anspruch 1, wobei die vordere Endfläche (1111) und die hintere Endfläche der flachen Zahnstangenzähne (112) senkrecht zu der Oberseite der Basis (13) und parallel zu der Übertragungsrichtung der Zahnstange (10) sind.

4. Zahnstangengetriebeanordnung nach Anspruch 1, wobei ein Zahnprofil der Zahnstange (10) der Zahnstangenzähne (11) eine schräge Linie ist, und ein Ritzelzahnprofil der Ritzelzähne (21) eine Evolvente ist.

5. Zahnstangengetriebeanordnung nach Anspruch 1, wobei eine Erstreckungslinie der Schnittlinie (214) durch die Mitte des Ritzels (20) verläuft, und die zwei benachbarten abgeschrägten Flächen symmetrisch auf beiden Seiten der Schnittlinie (214) angeordnet sind.

6. Zahnstangengetriebeanordnung nach Anspruch 1, wobei die Zahnstangengetriebeanordnung das Ritzel (20) und die mit dem Ritzel (20) im Eingriff stehende Vielzahl von Zahnstangen (10) aufweist.

7. Zahnstangengetriebeanordnung nach Anspruch 1, wobei die Zahnstangengetriebeanordnung eine Zahnstange und die mit der Zahnstange (10) im Eingriff stehende Vielzahl von Ritzeln (20) aufweist.

8. Zahnstangengetriebeanordnung nach Anspruch 1, wobei die Zahnstangengetriebeanordnung eine Vielzahl von Zahnstangen und die mit dem Zahnstangen (10) im Eingriff stehende Vielzahl von Ritzeln (20) aufweist.

9. Zahnstangengetriebeanordnung nach einem der Ansprüche 1 bis 8, wobei die Zahnform der Zahnstange (10) und des Ritzels (20) gerade Zähne sind.

10. Getriebevorrichtung, wobei die Getriebevorrichtung die Zahnstangengetriebeanordnung nach einem der Ansprüche 1 bis 9 aufweist.

## Revendications

1. Ensemble de transmission à crémaillère et pignon, comprenant un pignon denté (20) et une crémaillère (10) engrenant avec le pignon denté (20) ; le pignon denté (20) comprenant une pluralité de dents de pignon (21), chaque paire de dents de pignon adjacentes (21) formant une rainure de dent de pignon (22) ;
la crémaillère (10) comprenant une base (13) avec une partie supérieure plane et une pluralité de dents de crémaillère (11) disposées à des intervalles sur la base (13), chaque paire de dents de crémaillère adjacentes (11) et la base (13) formant une rainure de dent de crémaillère (12); **caractérisé en ce que**
la crémaillère (10) comprend des dents de crémaillère inclinées (111) et des dents de crémaillère plates (112) disposées en alternance dans la direction de transmission de la crémaillère (10) ; à la fois une surface d'extrémité avant (1111) et une surface d'extrémité arrière (1112) des dents de crémaillère inclinées (111) sont des plans, un plan perpendiculaire à la direction de transmission de la crémaillère (10) est un premier plan, et à la fois un angle entre le premier plan et la surface d'extrémité avant (1111) et un angle entre le premier plan et la surface d'extrémité arrière (1112) sont des angles aigus ; un plan parallèle à la direction de transmission de la crémaillère (10) et perpendiculaire au premier plan est un second plan, à la fois un angle entre le second plan et la surface d'extrémité avant (1111) et un angle entre le second plan et la surface d'extrémité arrière (1112) sont des angles aigus; la longueur des dents de crémaillère inclinées (111) est supérieure à la longueur des dents de crémaillère plates (112) dans une direction linéaire parallèle à la fois au premier plan et au second plan ; des flancs de dent (212) sur deux côtés des dents de pignon (21) sont respectivement reliés aux surfaces d'extrémité des dents de pignon adjacentes (21) par des surfaces de chanfrein (213), et les deux surfaces de chanfrein adjacentes (213) se recoupent à une ligne d'intersection (214).

2. Ensemble de transmission à crémaillère (10) et pignon selon la revendication 1, dans lequel la surface d'extrémité avant (1111) et la surface d'extrémité arrière (1112) des dents de crémaillère inclinées (111) sont disposées symétriquement des deux côtés de la ligne centrale de la base (13) de la crémaillère (10), respectivement.

3. Ensemble de transmission à crémaillère (10) et pignon selon la revendication 1, dans lequel la surface d'extrémité avant (1111) et la surface d'extrémité arrière des dents de crémaillère plates (112) sont perpendiculaires au sommet de la base (13) et parallèles à la direction de transmission de la crémaillère (10).

4. Ensemble de transmission à crémaillère (10) et pignon selon la revendication 1, dans lequel un profil de dent de crémaillère (10) des dents de crémaillère (11) est une ligne oblique, et un profil de dent de pignon des dents de pignon (21) est une développante.

5. Ensemble de transmission à crémaillère (10) et pignon selon la revendication 1, dans lequel une ligne d'extension de la ligne d'intersection (214) passe par le centre du pignon denté (20), et les deux surfaces de chanfrein adjacentes sont disposées symétriquement des deux côtés de la ligne d'intersection (214).

6. Ensemble de transmission à crémaillère (10) et pignon selon la revendication 1, dans lequel l'ensemble de transmission à crémaillère (10) et pignon comprend un dit pignon denté (20) et la pluralité de crémaillères (10) engrenant avec le pignon denté (20).

7. Ensemble de transmission à crémaillère (10) et pignon selon la revendication 1, dans lequel l'ensemble de transmission à crémaillère (10) et pignon comprend une dite crémaillère et la pluralité de pignons dentés (20) engrenant avec la crémaillère (10).

8. Ensemble de transmission à crémaillère (10) et pignon selon la revendication 1, dans lequel l'ensemble de transmission à crémaillère (10) et pignon comprend une pluralité de crémaillères et la pluralité de pignons dentés (20) engrenant avec les crémaillères (10).

9. Ensemble de transmission à crémaillère (10) et pignon selon l'une quelconque des revendications 1 à 8, dans lequel la forme de dent de la crémaillère (10) et du pignon denté (20) sont des dents droites.

10. Dispositif de transmission, dans lequel le dispositif de transmission comprend l'ensemble de transmission à crémaillère (10) et pignon selon l'une quelconque des revendications 1 à 9.
